(19) **Europäisches Patentamt**
**European Patent Office**
**Office européen des brevets**

(11) **EP 3 989 110 A1**

(12) **EUROPEAN PATENT APPLICATION**
published in accordance with Art. 153(4) EPC

(43) Date of publication:
**27.04.2022 Bulletin 2022/17**

(21) Application number: **20849365.0**

(22) Date of filing: **06.08.2020**

(51) International Patent Classification (IPC):
***G06K 9/00*** *(2022.01)*

(52) Cooperative Patent Classification (CPC):
**G06K 9/00**

(86) International application number:
**PCT/CN2020/107477**

(87) International publication number:
**WO 2021/023273 (11.02.2021 Gazette 2021/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.08.2019 CN 201910726557**
**30.11.2019 CN 201911209272**
**04.08.2020 CN 202010773510**

(71) Applicant: **Huawei Technologies Co., Ltd.**
**Longgang District**
**Shenzhen,**
**Guangdong 518129 (CN)**

(72) Inventors:
• **WANG, Jianwen**
**Shenzhen, Guangdong 518129 (CN)**
• **YU, Feng**
**Shenzhen, Guangdong 518129 (CN)**
• **ZHAO, Huihua**
**Shenzhen, Guangdong 518129 (CN)**
• **CHU, Jing**
**Shenzhen, Guangdong 518129 (CN)**
• **WANG, Heng**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **FINGERPRINT RECOGNITION DEVICE AND ELECTRONIC TERMINAL**

(57) A small-thickness low-cost fingerprint recognition apparatus and an electronic terminal are provided. The fingerprint recognition apparatus includes an optical film and an image sensor that are disposed at an interval of a first distance along a first direction. The optical film includes a first area and a second area, transmittances of the first area and the second area are different, the first area and the second area form a first pattern, and when receiving light reflected by a first object, the optical film converts the light into an optical image that has the first pattern and transmits the optical image to the image sensor. The image sensor is configured to receive an optical signal of the optical pattern and convert the optical signal into an electrical signal. The electrical signal is used to construct an image of a surface that is of the first object and that reflects the light. An electronic terminal including the foregoing fingerprint recognition apparatus is provided.

FIG. 3

## Description

This application claims priority to Chinese Patent Application No. 201910726557.6, filed with the China National Intellectual Property Administration on August 7, 2019, and entitled "NOVEL OPTICAL FINGERPRINT SENSOR STRUCTURE AND IMPLEMENTATION METHOD"; claims priority to Chinese Patent Application No. 201911209272.1, filed with the China National Intellectual Property Administration on November 30, 2019, and entitled "FINGERPRINT RECOGNITION MODULE AND ELECTRONIC TERMINAL"; and claims priority to Chinese Patent Application No. 202010773510.8, filed with the China National Intellectual Property Administration on August 4, 2020, and entitled "FINGERPRINT RECOGNITION APPARATUS AND ELECTRONIC TERMINAL", which are incorporated herein by reference in their entireties.

## TECHNICAL FIELD

Embodiments of this application relate to the field of image display and optical image sensing technologies, and in particular, to a fingerprint recognition apparatus and an electronic terminal.

## BACKGROUND

Currently, in an electronic terminal that can perform fingerprint recognition and verification, all fingerprint sensing modules use optical lenses to process received light and then provide processed light to a fingerprint sensor. It is relatively difficult to further reduce a thickness of an optical lens due to a material of the optical lens, and optical lenses have relatively high costs. Therefore, a fingerprint recognition module with relatively high costs and relatively little room for overall thickness reduction cannot meet requirements of users for thin and low-cost electronic devices.

## SUMMARY

To resolve the foregoing technical problem, this application provides a fingerprint recognition apparatus and an electronic terminal, so that the fingerprint recognition apparatus has a relatively small overall thickness and relatively low costs.

According to a first aspect, an embodiment of this application provides a fingerprint recognition apparatus. The fingerprint recognition apparatus includes an optical film and an image sensor that are disposed at an interval of a first distance along a first direction. The optical film includes a first area and a second area, transmittances of the first area and the second area are different, and the first area and the second area form a first pattern. When receiving light reflected by a first object, the optical film converts the light into an optical image that has the first pattern and transmits the optical image to the image sensor. The image sensor is configured to receive an optical signal of the optical pattern and convert the optical signal into an electrical signal. The electrical signal is used to construct an image of a surface that is of the first object and that reflects the light.

In an embodiment of this application, a range of the first distance is less than 0.5 millimeter.

In an embodiment of this application, a thickness of the optical film along the first direction is less than 500 micrometers.

In an embodiment of this application, the optical film and the first object are spaced by a second distance along the first direction, and the second distance ranges from 0.05 to 5 millimeters.

In an embodiment of this application, the first area and the second area are disposed alternately in adjacency starting from a central position of the optical film, the first area is an enclosed graph including curves or straight lines, and the second area is an enclosed graph including curves or straight lines.

In an embodiment of this application, the optical film includes at least two subregions, each subregion includes the first area and the second area, and the first area and the second area are enclosed rings or rectangles.

In an embodiment of this application, the first area and the second area are disposed alternately in adjacency starting from a central position of the optical film, the first area includes segmental curves that have a same curvature or different curvatures, and the second area includes segmental curves that have a same curvature or different curvatures.

In an embodiment of this application, the first area and the second area are disposed alternately, and the first area and the second area are both in spiral shapes that gradually extend outward.

In an embodiment of this application, the optical film includes at least two subregions, each subregion includes the first area and the second area, and the first area and the second area are in spiral shapes that gradually extend outward.

In an embodiment of this application, the optical film includes at least two subregions, and the first area and the second area included in the subregions are in different shapes.

In an embodiment of this application, the at least two areas include a first subregion and a second subregion. The first area and the second area in the first subregion are both enclosed rectangles including curves or straight lines, and the first area and the second area in the second subregion are enclosed rings including curves or straight lines. Alternatively, the first area and the second area in the first subregion are both enclosed rectangles including curves or straight lines or enclosed rings including curves or straight lines, and the first area and the second area in the second subregion are in spiral shapes that gradually extend outward and include segmental curves that have a same curvature or different curvatures.

In an embodiment of this application, the at least two areas include a first subregion, a second subregion, and a third subregion;

the first area and the second area in the first subregion are both enclosed rectangles including curves or straight lines;
the first area and the second area in the second subregion are enclosed rings including curves or straight lines; and
the first area and the second area in the third subregion are in spiral shapes that gradually extend outward and include segmental curves that have a same curvature or different curvatures.

In an embodiment of this application, a material of the optical film is resin, glass, or a high-transmittance material, or a combination of one or more of a high-transmittance low-reflectivity material and a high-transmittance high-reflectivity material.

In an embodiment of this application, the fingerprint recognition apparatus further includes a first light source. The first light source is configured to provide auxiliary light. The auxiliary light passes through the optical film and is transmitted to the first object. The first light source and the image sensor are disposed on a surface of a support member, and the support member is configured to support the first light source and the image sensor. Alternatively, the first light source is a display screen. The display screen is configured to display an image and is disposed on a side that is of the optical film and that is away from the image sensor. The display screen provides auxiliary light when displaying an image and directly transmits the auxiliary light to the first object.

In an embodiment of this application, a distance between a first surface of the optical film and the surface of the support member is less than 1 millimeter along the first direction.

In an embodiment of this application, the optical film includes the first surface and a second surface that are disposed opposite to each other in the first direction, the first surface is farther away from the image sensor than the second surface, and first optical processing is performed on the first surface, to collect light in a preset frequency band range.

In an embodiment of this application, the optical film includes the first surface and the second surface that are disposed opposite to each other in the first direction, the first surface is farther away from the image sensor than the second surface, and second optical processing is performed on the second surface, to collect light in a preset frequency band range.

In an embodiment of this application, the image sensor includes a third surface, the third surface directly faces the optical film, and third optical processing is performed on the third surface, to collect light in a preset frequency band range.

In an embodiment of this application, the optical film includes a plurality of conductive electrodes, the plurality of conductive electrodes are configured to receive a first voltage, and the first voltage controls different areas of the optical film to have different transmittances, to form different patterns.

In an embodiment of this application, patterns formed by the optical film at different time points are different in phase, area size, or inter-area spacing.

In an embodiment of this application, the optical film includes a first base material layer, a medium layer, and a second base material layer that are stacked in sequence, and a cavity is formed between the first base material layer and the second base material layer to accommodate the medium layer. A plurality of pixel areas arranged as a matrix and a plurality of conductive pads are disposed on the second base material layer. A drive circuit is disposed in each pixel area, the drive circuits are electrically connected to the conductive pads and receive the first voltage by using the conductive pads, and the drive circuit generates electric fields with different strengths under control of different first voltages. The medium layer has different transmittances in electric fields with different strengths. When different pixel areas receive different drive voltages, the first pattern with different transmittances is formed.

In an embodiment of this application, the first base material layer is further configured to filter out light with a preset frequency band and wavelength.

In an embodiment of this application, different first voltages are provided to the plurality of pixel units in different time periods, and the pattern is presented at different times. This efficiently improves flexibility of the optical film in presenting different patterns.

According to a second aspect, an embodiment of this application provides an electronic terminal. The electronic terminal includes a display screen and the foregoing fingerprint recognition apparatus. The display screen is disposed on a side that is of the optical film and that is away from the image sensor along the first direction. The display screen and the optical film are spaced by a third distance, and the third distance ranges from 0.005 to 5 millimeters. Light reflected by the first object passes through the display screen and is transmitted to the optical film.

In an embodiment of this application, the optical film is replaced with the display screen, and the display screen includes a pattern.

**BRIEF DESCRIPTION OF DRAWINGS**

FIG. 1 is a schematic diagram of a planar structure of an electronic terminal according to a first embodiment of this application;
FIG. 2 is a schematic diagram of a sectional structure along an I-I line of the electronic terminal shown in FIG. 1 according to an embodiment of this application;

FIG. 3 is a schematic diagram of a pattern of an optical film shown in FIG. 2 according to a first embodiment of this application;

FIG. 4 is a schematic diagram of a pattern of an optical film shown in FIG. 2 according to a second embodiment of this application;

FIG. 5 is a schematic diagram of a pattern of an optical film shown in FIG. 2 according to a third embodiment of this application;

FIG. 6 is a schematic diagram of a pattern of an optical film shown in FIG. 2 according to a fourth embodiment of this application;

FIG. 7 is a schematic diagram of a pattern of an optical film shown in FIG. 2 according to the fourth embodiment of this application;

FIG. 8 is a schematic diagram of a pattern of an optical film shown in FIG. 2 according to the fourth embodiment of this application;

FIG. 9 is a schematic diagram of a pattern of an optical film shown in FIG. 2 according to a fifth embodiment of this application;

FIG. 10 is a schematic diagram of a pattern shape of an optical film shown in FIG. 2 according to the fifth embodiment of this application;

FIG. 11 is a schematic diagram of a sectional structure along an I-I line of an electronic terminal shown in FIG. 1 according to a sixth embodiment of this application;

FIG. 12 is a schematic diagram of a sectional structure along an I-I line of an electronic terminal shown in FIG. 1 according to a seventh embodiment of this application;

FIG. 13 is a schematic diagram of a planar structure of a second base material layer shown in FIG. 12;

FIG. 14 is a top view of a fingerprint recognition apparatus shown in FIG. 12;

FIG. 15 is a schematic diagram of a sectional structure along an I-I line of an electronic terminal shown in FIG. 1 according to an eighth embodiment of this application;

FIG. 16 is a schematic diagram of a pattern shape of a display screen shown in FIG. 15; and

FIG. 17 is a schematic diagram of light intensity distribution of two areas with different light intensities in a display screen shown in FIG. 16.

## DESCRIPTION OF EMBODIMENTS

Specific embodiments are used below to describe this application.

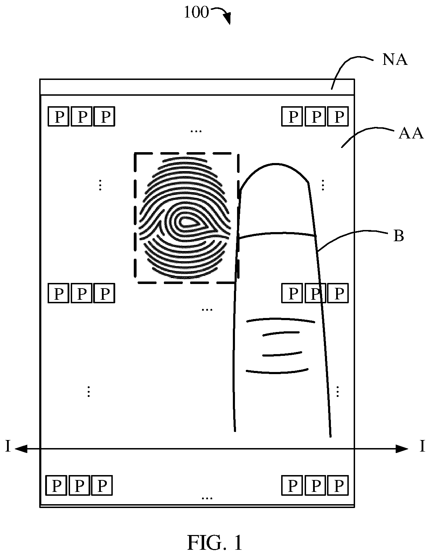

Refer to FIG. 1. FIG. 1 is a schematic diagram of a planar structure of an electronic terminal according to a first embodiment of this application. As shown in FIG. 1, the electronic terminal 100 is configured to display an image and also receive a touch operation of a finger of a user. When a touch operation is performed, the electronic terminal 100 may also detect a position at which the electronic terminal 100 receives the touch operation, and detect and reconstruct an image of the finger that touches the electronic terminal 100. In this embodiment, the image of the finger that touches the electronic terminal 100 includes an image of a to-be-sensed object. The image of the to-be-sensed object includes detection and reconstruction of a fingerprint of the finger, thereby recognizing the fingerprint of the finger that touches the electronic terminal 100. In this embodiment, a first object B is a finger.

The electronic terminal 100 includes a display area AA and a non-display area NA. The display area AA is configured to display an image. The non-display area NA is disposed on an edge of the display area AA and is used for arrangement of a non-display component. The display area AA includes a plurality of pixel units P that are arranged as a matrix. The plurality of pixel units P cooperate with a drive circuit (which is not illustrated in the figure) to display an image by emitting light based on a data signal. In this embodiment, the pixel unit P may include an organic light-emitting diode (Organic Light-Emitting Diode, OLED) or liquid crystal. The pixel unit P includes a plurality of image display subunits (which are not illustrated in the figure) that emit light with different colors. The plurality of image display subunits emitting light with different colors cooperate, so that the pixel unit emits colored light with different luminances. In this embodiment, a fingerprint recognition apparatus 10 may be disposed at any position in the display area AA or the non-display area NA. The fingerprint recognition apparatus 10 is configured to detect the fingerprint of the finger that touches the electronic terminal 100, and further reconstruct an image of the detected fingerprint, thereby recognizing the fingerprint of the finger that touches the electronic terminal 100.

In this embodiment, the electronic terminal 100 may be a mobile communications terminal such as a mobile phone or a tablet computer, or may be another terminal that needs to perform image sensing.

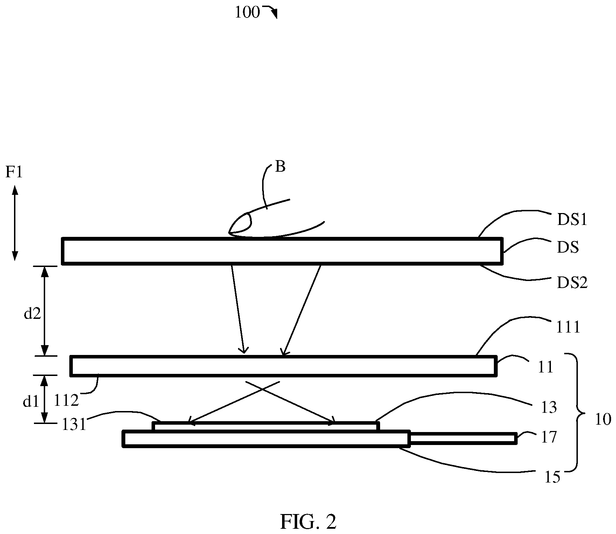

Refer to FIG. 2. FIG. 2 is a schematic diagram of a sectional structure along an I-I line of the electronic terminal 100 shown in FIG. 1 according to an embodiment of this application.

As shown in FIG. 2, in the electronic terminal 100, a display screen DS (Display Screen) and an optical film 11, an image sensor 13, a support member 15, and a first circuit board 17 in a fingerprint recognition apparatus 10 are stacked in sequence from top to bottom along a first direction F1.

The optical film 11 is configured to: when receiving light reflected by a finger, convert the light into an optical signal of a first pattern and transmit the optical signal to the image sensor 13. The image sensor 13 receives the optical signal of the first pattern and converts the optical signal into an electrical signal, where the electrical signal is used to construct an image of a surface that is of the finger and that reflects the light. In this embodiment, the image sensor 13 may be implemented by using a charge-coupled device (Charge Coupled Device, CCD) sensor or a complementary metal-oxide-semiconductor (Complementary Metal Oxide Semiconductor, COMS) image sensor.

The support member 15 is configured to support the image sensor 13. The first circuit board 17 and the support member 15 are disposed in adjacency, and the first circuit board 17 is electrically connected to the image sensor 13. A functional circuit on the first circuit board 17 provides driving power and a control signal to the image sensor 13, to drive and control the image sensor 13 to convert an optical signal into an electrical signal, and transmit, to an image processor (which is not illustrated in the figure), the electrical signal received from the image sensor 13. The image processor performs processing such as amplification and filtering on the electrical signal, and constructs, based on a processed electrical signal, the image of the surface that is of the finger and that reflects the light. In this embodiment, the first circuit board 17 may be a flexible circuit board and is directly electrically connected to the image sensor 13. Alternatively, the first circuit board 17 may be electrically connected to the image processor 13 by using a board-to-board (Board to Board) connector.

In this embodiment, a finger is used as an example of a first object B for description, and the electrical signal is used to construct an image of a line on the surface of the finger. In other words, a fingerprint image is constructed by using the electrical signal.

The image sensor 13 and the optical film 11 are spaced by a first distance d1 along the first direction F1. In this embodiment, the first distance d1 ranges from 0.001 to 0.5 millimeter (mm). The optical film 11 and the finger are spaced by a second distance d2 along the first direction F1. The second distance ranges from 0.05 to 5 millimeters (mm). A thickness of the optical film along the first direction F1 is less than 500 micrometers ($\mu$m). Therefore, an overall thickness of the fingerprint recognition apparatus 10 along the first direction F1 is less than 1 millimeter (mm).

In this embodiment, a material of the optical film 11 is resin, glass, or a high-transmittance material, or a combination of one or more of a high-transmittance low-reflectivity material and a high-transmittance high-reflectivity material. In addition, for example, the optical film 11 may alternatively be directly made of at least one of a Gabor zone plate, a Fresnel zone plate, and a mask. Alternatively, the optical film 11 may be made of a material that includes a plurality of materials and that is partially high in transmittance and partially high in reflectivity.

In this embodiment, the optical film 11 includes a first surface 111 and a second surface 112 that are opposite to each other in the first direction F1. The first surface 111 is farther away from the image sensor 13 than the second surface 112. First optical processing is performed on the first surface 111, to collect light in a preset frequency band range. The preset frequency band may be set based on an actual requirement. In this embodiment, a distance in the first direction F1 between the first surface 111 of the optical film 11 and a surface that is of the support member 15 and on which the image sensor 13 is disposed is less than 0.5 millimeter (mm).

Alternatively, second optical processing is performed on the second surface 112, to collect light in a preset frequency band range.

Alternatively, the image sensor 13 includes a third surface 131. The third surface 131 directly faces the optical film 11. In other words, the optical film 11 is disposed near the third surface 131 of the image sensor 13. Third optical processing is performed on the third surface 131, to collect light in a preset frequency band range.

The display screen DS includes a fifth surface DS1 and a sixth surface DS2 that are opposite to each other in the first direction F1. The fifth surface DS1 is configured to bear the finger. To be specific, when the finger operates the mobile terminal 10, the finger comes near or directly comes into contact with the fifth surface DS1 of the display screen DS. The sixth surface DS2 is closer to the optical film 11 than the fifth surface DS1.

In this embodiment, fourth optical processing is performed on the fifth surface DS1, to collect light in a preset frequency band range.

Alternatively, fifth optical processing is performed on the sixth surface DS2, to collect light in a preset frequency band range.

Optical processing in the first optical processing to the fifth optical processing may be coating with a film, or coating with a material such as liquid, powder, or granules, or removing a part of a material from a surface of an optical component.

To convert the received light into the optical signal of the first pattern, the optical film 11 is patterned. To be specific, the optical film 11 is patterned based on the first pattern. In this way, the optical signal of the first pattern is formed after light that is reflected by the finger and that enters the optical film 11 passes through a pattern of the optical film 11. In this embodiment, the patterned optical film 11 has different transmittances in different areas. Therefore, when light passes through the optical film 11, a pattern with regularly arranged luminance is formed. The optical signal of the first pattern obtained by passing through the optical film 11 has richer light intensity layers than that obtained by passing through an optical film with a single transmittance. To be specific, in the optical signal of the first pattern obtained through patterning, light in a preset frequency band may be superposed in terms of intensity, so that the image sensor 13 can have sufficient optical signals for performing conversion, ultimately improving quality of electrical signals obtained by the image sensor 13 by converting the optical signals and improving quality of an image constructed by using the electrical signals.

In this embodiment, patterning of the optical film 11 is to perform physical abrasion or etching by using a chemical agent on a surface of the optical film 11 based on a preset pattern shape, to form areas with different transmittances. Certainly, in another embodiment of this application, patterning of the optical film 11 may alternatively be implemented by using another process or method, and is not limited to the foregoing examples.

In addition, a thickness of the optical film 11 is relatively small. Therefore, space required by the optical film 11 is also relatively small. In this way, a thickness of the fingerprint recognition apparatus 10 is relatively small and costs of the optical film 11 are relatively low, thereby making costs of the fingerprint recognition apparatus 10 and the electronic terminal 100 relatively low.

On the one hand, a pattern shape of the optical film 11 after the patterning may be set based on an actual requirement, and the pattern shape of the optical film 11 after the patterning may include at least two areas with different transmittances. To be specific, the pattern shape of the optical film 11 after the patterning includes two, three, four, or another quantity of areas with different transmittances. A quantity of areas with different transmittances may be set based on an actual requirement.

On the other hand, after the optical film 11 is patterned, transmittances of light transmitting areas may be the same, or transmittances of light transmitting areas may vary according to a preset rule. For example, using a central point of the optical film 11 as a reference point, the transmittance of the light transmitting area gradually decreases or gradually increases as a distance to the central point gradually increases. Using the central point of the optical film 11 as a reference point, the transmittance of the light transmitting area varies according to a rule such as sine, cosine, tangent, or cotangent as a distance to the central point of the optical film 11 changes.

An adjacent zone X that includes points with similar transmittances is formed at a border of two adjacent areas with different transmittances. A width of the adjacent zone X is determined by a quantity of points with similar transmittances. For example, when quantities of points with similar transmittances in two adjacent zones X at different positions are different, the two adjacent zones X with different widths are formed.

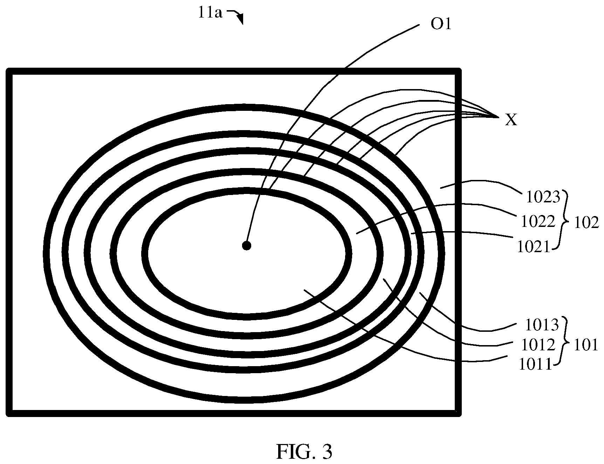

In a possible implementation, when the transmittances of the light transmitting areas may vary according to a preset rule, for light transmitting areas whose transmittances are in a same range, the transmittances of the light transmitting areas vary in a same tendency as a distance to the central point gradually increases; and for light transmitting areas whose transmittances are in different ranges, the transmittances of the light transmitting areas vary in opposite tendencies as a distance to the central point gradually increases. For example, for light transmitting areas whose transmittances range from 85% to 95%, the transmittances of the light transmitting areas gradually decrease as a distance to the central point gradually increases; and for light transmitting areas whose transmittances range from 5% to 10%, the transmittances of the light transmitting areas gradually increase as a distance to the central point gradually increases. Refer to FIG. 3. FIG. 3 is a schematic diagram of a pattern shape of an optical film 11a shown in FIG. 2 according to a first embodiment of this application.

As shown in FIG. 3, the optical film 11a includes a first area 101 and a second area 102 that have different transmittances. In other words, the first area 101 and the second area 102 have different transmittances. In this embodiment, a transmittance of the first area 101 is greater than a transmittance of the second area 102. For example, the transmittance of the first area 101 is 99%, and the transmittance of the second area 102 is 85%. The first area 101 and the second area 102 are disposed alternately in adjacency in sequence in a direction extending outward from a central point O1 of the optical film 11a to an edge area.

In this embodiment, as shown in FIG. 3, the first area 101 may include three subareas, which are a first subarea 1011, a third area 1012, and a fifth subarea 1013 that are located at different positions and whose distances to the central point O1 gradually increase. The second area 102 includes three subareas, which are a second subarea 1021, a fourth subarea 1022, and a sixth subarea 1023 that are located at different positions and whose distances to the central point O1 gradually increase. In another embodiment of this application, quantities of subareas included in the first area 101 and the second area 102 may be set according to a specific requirement, but are not limited to the quantities shown in FIG. 3. For example, the first area 101 and the second area 102 each may alternatively include four, five, six, or another quantity of subareas.

The three subareas 1011 to 1013 in the first area 101 each include segmental curves with a same curvature or different curvatures, and the three subareas 1021 to 1023 in the second area 102 each include segmental curves with a same curvature or different curvatures. Alternatively, the three subareas 1011 to 1013 in the first area 101 each may be an enclosed graph including curves with any curvatures or including straight lines. Correspondingly the three subareas 1021 to 1023 in the second area 102 each may be an enclosed graph including curves with any curvatures or including straight lines. Alternatively, the first area 101 is in a spiral shape that gradually extends outward. Correspondingly, the second area 102 is in a spiral shape that gradually extends outward. In other words, the first area 101 and the second area 102 each include spiral line segments whose curvatures gradually decrease starting from the central point.

As shown in FIG. 3, the three subareas 1011 to 1013 in the first area 101 each are enclosed ring-shaped areas including line segments with different curvatures, and the three subareas 1021 to 1023 in the second area 102 each are enclosed ring-shaped areas including line segments with different curvatures. Starting from a position of the central point of the optical film 101a, the three subareas 1011 to 1013 in the first area 101 are respectively disposed alternately with the three subareas 1021 to 1023 in the second area 102 in sequence, and the second area 102 directly borders the first area 101. In other words, the first area 101 and the second area 102 are not spaced apart.

The first area 101 is first disposed starting from a central area of the optical film 11a, and then the second area 102 is disposed. Subsequently, the first area 101 and the second area 102 are disposed alternately in sequence. Specifically, in this embodiment, extending outward in sequence from the central point O1 of the optical film 11a, the first subarea 1011, the third subarea 1012, and the fifth subarea 1013 are respectively disposed alternately with and in adjacency with the second subarea 1021, the fourth subarea 1022, and the sixth subarea 1023 in sequence.

In another embodiment, the second area 102 is first disposed starting from a central area of the optical film 11a, and then the first area 101 is disposed. Subsequently, the second area 102 and the first area 101 are disposed alternately in sequence. In other words, which of the first area 101 and the second area 102 is disposed first starting from a central position is not limited by the illustration in the figure, and may be set based on an actual requirement.

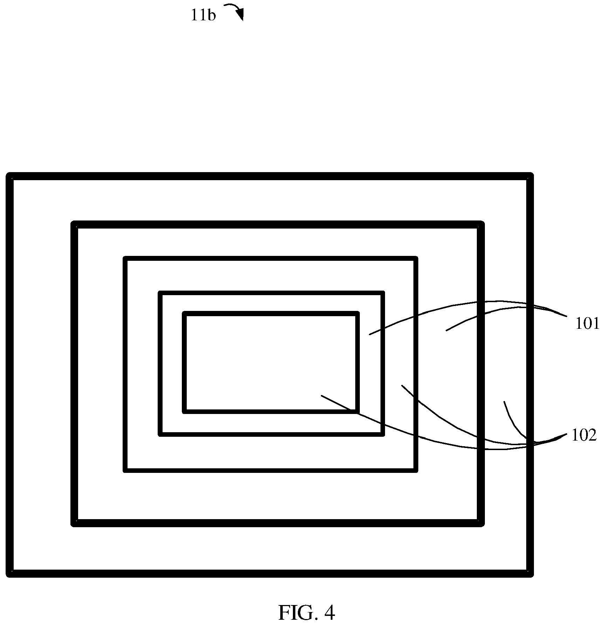

Refer to FIG. 4. FIG. 4 is a schematic diagram of a pattern shape of an optical film 11b shown in FIG. 2 according to a second embodiment of this application.

As shown in FIG. 4, a first area 101 is an enclosed ring-shaped area including straight line segments, and a second area 102 is an enclosed rectangular area including straight line segments. The first area 101 may be an enclosed area including a plurality of enclosing straight line segments that are connected head to tail, and a shape formed by the plurality of enclosing straight line segments may be a square or the like. Correspondingly, the second area 102 may be an enclosed area including a plurality of enclosing straight line segments that are connected head to tail, and a shape formed by the plurality of enclosing straight line segments may be a square or the like.

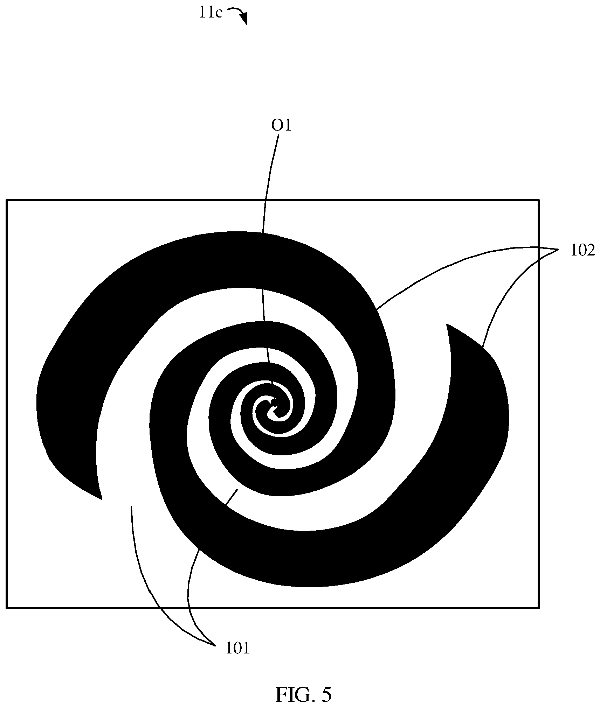

Refer to FIG. 5. FIG. 5 is a schematic diagram of a pattern shape of an optical film 11c shown in FIG. 2 according to a third embodiment of this application.

As shown in FIG. 5, a first area 101 includes segmental curves with a same curvature or different curvatures, and a second area 102 includes segmental curves with a same curvature or different curvatures. In other words, the first area 101 and the second area 102 are not enclosed areas including enclosing curve segments that are connected head to tail. For example, the first area 101 and the second area 102 are both in spiral shapes that gradually extend outward starting from a position of a central point O1 of the optical film 11c toward an edge.

In this embodiment, the optical film 11c includes two second areas 102. The two second areas 102 are areas that are in spiral shapes, that have different curvatures (which are not illustrated), and whose curvature radii (which are not illustrated) gradually increase and whose curvatures gradually decrease starting from the position of the central point O1. Correspondingly, the optical film 11c includes two first areas 101. The two first areas 101 are areas that are in spiral shapes, that have different curvatures, and whose curvature radii gradually increase and whose curvatures gradually decrease starting from the position of the central point O1.

Curvatures and curvature radii of the first area 101 and the second area 102 at the central point O1 and variation speeds of curvatures and curvature radii in a gradual variation process may be set based on an actual requirement.

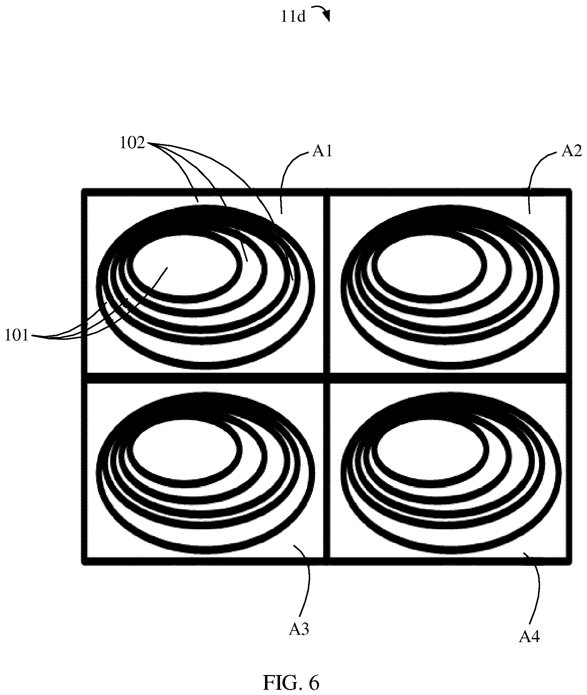

In an embodiment of this application, an optical film 11d includes at least two subregions. Each subregion includes a pattern including a first area 101 and a second area 102. For example, as shown in FIG. 6, the optical film 11d includes four subregions, and each subregion includes a pattern that includes the first area 101 and the second area 102. Certainly, in another embodiment of this application, a quantity of subregions may alternatively be two, three, five, six, or the like, and is not limited thereto.

Refer to FIG. 6. FIG. 6 is a schematic diagram of a pattern shape of the optical film 11d shown in FIG. 2 according to a fourth embodiment of this application.

As shown in FIG. 6, the four subregions may include a first subregion A1, a second subregion A2, a third subregion A3, and a fourth subregion A4. The four areas are all rectangles.

Patterns including the first area 101 and the second area 102 are the same in the first subregion A1, the second subregion A2, the third subregion A3, and the fourth subregion A4.

For example, as shown in FIG. 6, in each of the first subregion A1, the second subregion A2, the third subregion A3, and the fourth subregion A4, a shape including the first area 101 and the second area 102 is an enclosed ring.

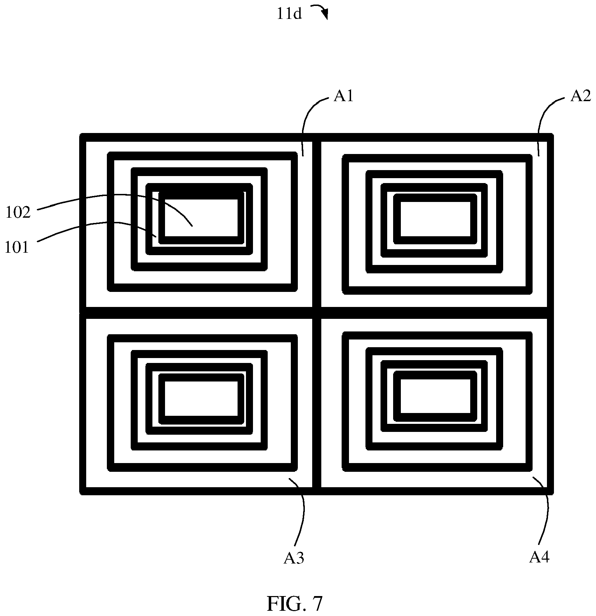

Alternatively, as shown in FIG. 7, in each of the first subregion A1, the second subregion A2, the third subregion A3, and the fourth subregion A4, a shape including the first area 101 and the second area 102 is an enclosed rectangle.

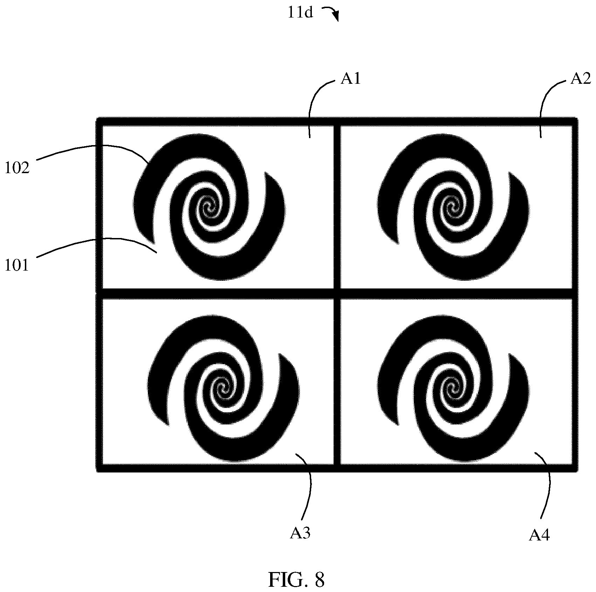

Alternatively, as shown in FIG. 8, in each of the first subregion A1, the second subregion A2, the third subregion A3, and the fourth subregion A4, a shape including the first area 101 and the second area 102 is an open spiral form that gradually extends outward starting from a central point.

Alternatively, patterns including the first area 101 and the second area 102 are not completely the same in the first subregion A1, the second subregion A2, the third subregion A3, and the fourth subregion A4.

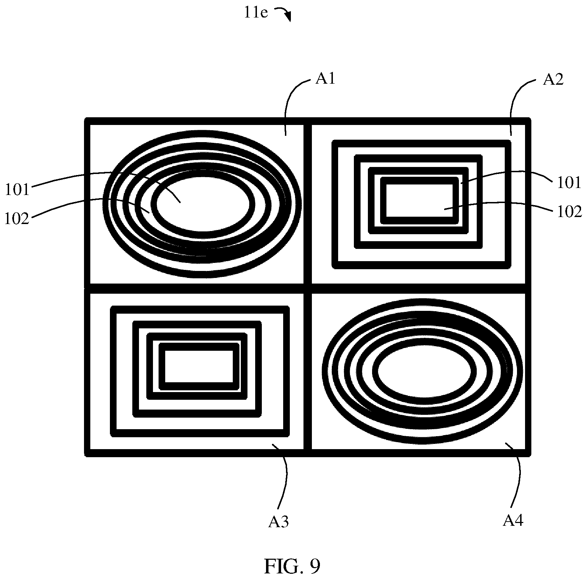

Refer to FIG. 9. FIG. 9 is a schematic diagram of a pattern shape of an optical film 11e shown in FIG. 2 according to a fifth embodiment of this application. As shown in FIG. 9, four subregions may include a first subregion A1, a second subregion A2, a third subregion A3, and a fourth subregion A4. The four areas are all rectangles.

Patterns including a first area 101 and a second area 102 are not completely the same in the first subregion A1, the second subregion A2, the third subregion A3, and the fourth subregion A4.

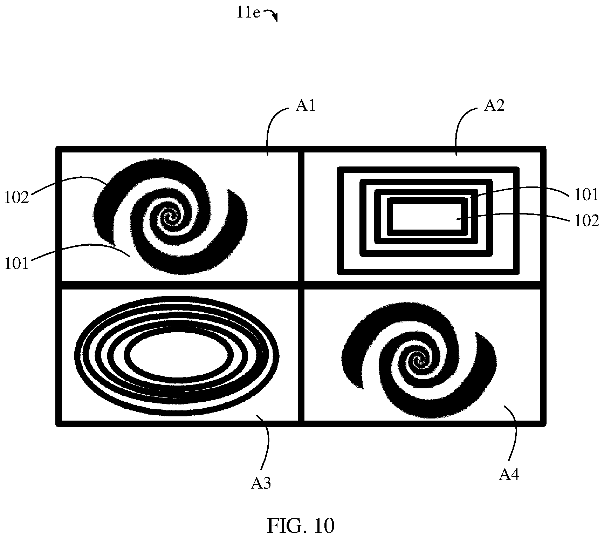

For example, as shown in FIG. 10, patterns included in the first subregion A1 and the fourth subregion A4 are the same. In other words, pattern shapes including the first area 101 and the second area 102 are the same in these two areas. For example, shapes of the first area 101 and the second area 102 included in these two subregions are both open spiral forms that gradually extend outward starting from a central point.

Shapes of the first area 101 and the second area 102 included the second subregion A2 are both enclosed rectangles.

Shapes of the first area 101 and the second area 102 included the second subregion A3 are both enclosed rings.

It should be noted that a sequence of shapes of the first area 101 and the second area 102 disposed in the first subregion A1, the second subregion A2, the third subregion A3, and the fourth subregion A4 may be set based on an actual requirement, and is not limited to a sequence shown in the figure in which a spiral form that gradually extends outward is followed by a rectangle, a ring, and a spiral form that gradually extends outward. A sequence may alternatively be that a rectangle is followed by a spiral form that gradually extends outward, a ring, and a spiral form that gradually extends outward; or another sequence may be used. In addition, shapes of the first area 101 and the second area 102 that are the same in the four subregions are limited to a spiral form that gradually extends outward, and may alternatively be an enclosed rectangle or ring.

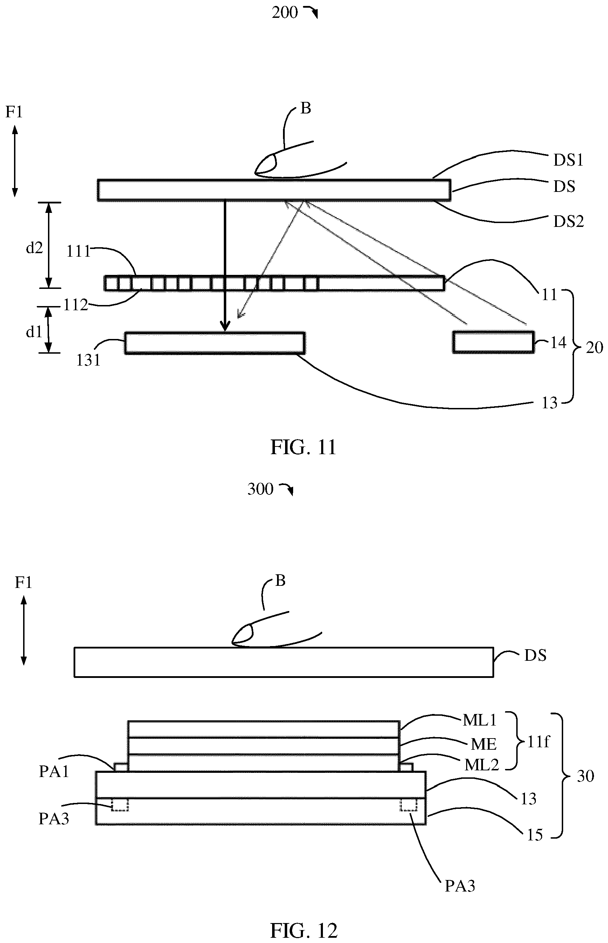

Refer to FIG. 11. FIG. 11 is a schematic diagram of a sectional structure along an I-I line of an electronic terminal 200 shown in FIG. 1 according to a sixth embodiment of this application.

As shown in FIG. 11, in the electronic terminal 200, a display screen DS (Display Screen) and an optical film 11 and an image sensor 13 in a fingerprint recognition apparatus 20 are stacked in sequence from top to bottom along a first direction F1. In addition, the fingerprint recognition apparatus further includes a first light source 14. The first light source 14 is disposed at an interval of a preset distance from the image sensor 13 in a horizontal direction, and is configured to emit light toward the optical film 11 and a finger along the first direction F1.

The display screen DS is configured to emit light and display an image. In this embodiment, the display screen DS may be a liquid crystal display or an organic light-emitting diode (Organic Light-Emitting Diode, OLED) display.

The display screen DS emits light when displaying an image. In this way, the light emitted by the display screen DS when displaying an image may be incident on the finger. The light is reflected by the finger and enters the optical film 11. The light entering the optical film 11 is patterned by the optical film 11 and then transmitted to the image sensor 13. The image sensor 13 detects the light provided by the optical film 11, to obtain an image of the finger.

In addition, the first light source 14 is configured to provide auxiliary light. The auxiliary light is incident on the finger after passing through the optical film 11, and then the light is reflected to the optical film 11 by the finger. In this embodiment, the first light source 14 may be a light-emitting diode (Light-Emitting Diode, LED). In this way, when the display screen DS does not emit light to display an image or provides insufficient light, or ambient light of the display screen DS is insufficient, the first light source 14 can still provide and emit light to the finger for reflection, so that the optical film 11 and the image sensor 13 can recognize the image of the finger by detecting light reflected by the finger. This efficiently improves recognition efficiency of the fingerprint recognition apparatus 20, and also expands application scenarios of the fingerprint recognition apparatus 20 and improves convenience of use of the fingerprint recognition apparatus 20.

In this embodiment, a structure of the optical film 11 in FIG. 11 is same as the optical film 11 shown in FIG. 2 in terms of shape, structure, material, and working principle. Details are not described again in this embodiment.

In the fingerprint module 10 shown in FIG. 3 to FIG. 11, the image sensor 13 collects, for a plurality of times based on a preset frequency, an optical signal provided by the optical film 11, and converts the optical signals into a plurality of groups of electrical signals. In other words, a fingerprint of the current finger is collected for a plurality of times and converted into a plurality of groups of electrical signals, and then the plurality of groups of electrical signals are processed, to obtain a fingerprint image. Processing of the electrical signals includes signal superposition, encoding, denoising, signal enhancement, decoding, and the like.

Specifically, the processing of the electrical signals includes the following steps:

Step 101. Select one group of electrical signals from the plurality of groups of electrical signals, where the selected group of electrical signals includes richest feature points and can represent the fingerprint more accurately than another group of electrical signals, for example, includes most feature points of a ridge, a valley, and a node (crossover) in the fingerprint.

Step 102. Superpose an electrical signal corresponding to a preset virtual image onto the selected group of electrical signals, where the preset virtual image is a virtual image same as a fixed pattern. In this embodiment, the preset virtual image is an image having a same pattern shape as that on the optical film 11. A virtual image may be described or represented by using a function, and an electrical signal corresponding to the virtual image may be obtained by combining a plurality of electrical sub-signals that meet a function relationship.

Step 103. Extract interference information obtained after the selected group of electrical signals and the preset virtual image are superposed, and perform computation, to obtain the fingerprint image. In this embodiment, for example, the computation after the interference information is extracted includes performing Fourier transform computation. Certainly, the computation after the interference information is extracted may further include other computation processing based on an actual requirement, and is not limited to the example.

Refer to FIG. 12. FIG. 12 is a schematic diagram of a sectional structure along an I-I line of an electronic terminal 300 shown in FIG. 1 according to a seventh embodiment of this application.

In this embodiment, a fingerprint recognition apparatus 30 in the electronic terminal 300 is basically the same as the fingerprint recognition apparatus 10 shown in FIG. 2 in terms of structure, and a difference lies only in that a material of an optical film 11f is different from that in FIG. 3 to FIG. 10 and the optical film 11f can present different first patterns at different times. In other words, a first pattern on the optical film 11f in this embodiment is dynamic but not just a fixed pattern shape. In this embodiment, the optical film 11f is made of a material that can represent different transmittances based on different voltage signals.

Specifically, as shown in FIG. 12, the optical film 11f includes a first base material layer (Material Layer) ML1, a medium (Medium) layer Me, and a second base material layer ML2. A sealed cavity is formed between the first base material layer ML1 and the second base material layer ML2 to accommodate the medium layer Me, and the medium layer Me can have different transmittance and luminous fluxes under control of an electric field.

In this embodiment, the medium layer Me is a liquid crystal material, and the liquid crystal material forms a liquid crystal grating under control of an electric field. In another embodiment of this application, the medium layer Me may alternatively be another material whose transmittance and luminous flux varies with an electric field or a magnetic field, and is not limited thereto.

In this embodiment, the first base material layer ML1 is made of a material that has a light filtering feature. To be specific, in addition to forming the sealed cavity together with the second base material layer ML2 to accommodate the medium layer Me, the first base material layer ML1 is further configured to filter light of a preset frequency band. For example, the first base material layer ML1 may be made of a light filter (IR-filter).

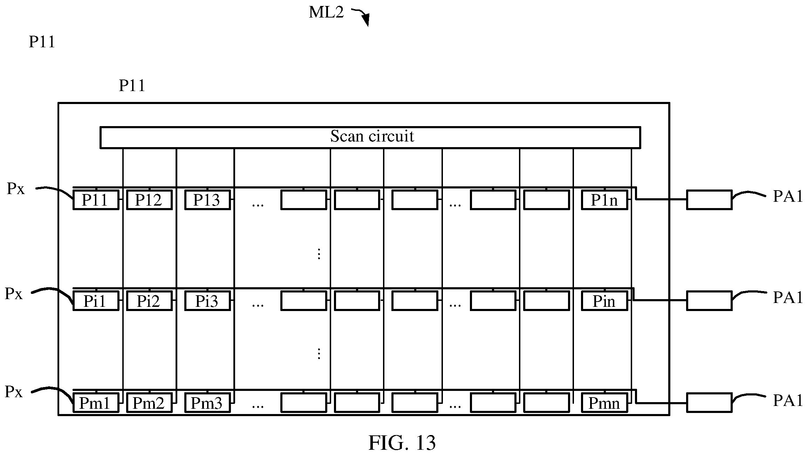

Refer to FIG. 13. FIG. 13 is a schematic diagram of a planar structure of the second base material layer ML2 shown in FIG. 12. As shown in FIG. 13, a plurality of pixel areas Px (Pixel Area) arranged as a matrix are disposed on the second base material layer ML2. A drive circuit (which is not illustrated) is disposed in each pixel area Px. The drive circuit generates electric fields with different strengths under control of different voltages, and the electric fields with different strengths can control liquid crystal molecules in the medium layer Me to deflect by different angles. Therefore, different areas of the optical film 11f can have different transmittances by providing different voltages to the drive circuits in the pixel areas Px, and a transmittance pattern with a preset shape is even formed by providing different voltages to drive circuits in pixel areas Px at different positions.

In this embodiment, the pixel areas Px that have m rows x n columns and that are included in the optical film 11f may be represented as P11, P12, ..., P1n; ...; Pi1, Pi2, ..., Pin; Pn1, Pn2, ..., Pnm, where i is a natural number less than m.

It should be noted that the pixel areas Px on the second base material layer ML2 are used as a switch component for controlling light that passes through the optical film 11f, and does not need to display an image. In other words, the pixel areas Px are different, in terms of a function performed, from the pixel units P that are configured to display an image and that are shown in FIG. 1.

For the optical film 11f shown in FIG. 12, for example, a first voltage V1 is provided to the optical film 11f, and the first voltage VI controls a transmittance of the optical film 11f. Specifically, different patterns may be formed when areas in different shapes and at different positions on the optical film 11 receive different first voltages V1 and first currents I1.

Preferably, different voltages are configured for each area of the optical film 11 at different time points, so that the optical film 11 can form different patterns at different times. In some optional embodiments, different patterns may be different in term of one or more of a phase, an area size, or an inter-area spacing. In this embodiment, the first voltage V1 is a set including values of a plurality of voltages. A quantity of voltages is the same as a quantity of pixel areas Px.

For example, in a first time period t1, a first voltage set V1a that includes a first value set is provided to the optical film 11f, and the enclosed ring-shaped pattern that is shown in FIG. 3 and that includes the first area 101 and the second area 102 may be presented. The value set includes a plurality of voltage values correspondingly provided to the drive circuits of the pixel areas Px. Corresponding to a set of the pixel areas Px included in the optical film 11f, the first value set corresponding to the first voltage set V1a may be voltages provided to the pixel areas Px: {V11, V12, ..., V1n, ..., Vnm}.

In a second time period t2, a second voltage set V1b that includes a second value set is provided to the optical film 11, and the enclosed rectangular pattern that is shown in FIG. 4 and that includes the first area 101 and the second area 102 may be presented. The second value set corresponding to the second voltage set V1b may be voltages provided to the pixel areas Px: {V'11, V'12, ..., V'1n, ..., V'nm}.

In a third time period t3, a third voltage set V1c that includes a third value set is provided to the optical film 11, and the spiral-shaped pattern that is shown in FIG. 5 and that includes the first area 101 and the second area 102 may be presented. The third value set corresponding to the third voltage set V1c may be voltages provided to the pixel areas Px: {V"11, V"12, ..., V"1n, ..., V"nm}.

In a fourth time period t4, a fourth voltage set V1d that includes a fourth value set is provided to the optical film 11, and the enclosed ring-shaped patterns that are shown in FIG. 6 and that include the first areas 101 and the second areas 102 included in different subregions may be presented. The fourth value set corresponding to the fourth voltage set V1d may be voltages provided to the pixel areas Px: {V'''11, V'''12, ..., V'''1n, ..., V'''nm}.

The rest is done in the same manner. Voltage values in a set corresponding to first voltages VI corresponding to different pixel areas are adjusted in different time periods, so that patterns in FIG. 3 to FIG. 10 or patterns not illustrated may be presented at different times.

In this embodiment, the quantity of the pixel areas Px may be set based on precision of a pattern formed by the optical film 11f. A higher precision means a smaller area of each pixel area Px and a larger quantity of pixel areas Px per unit area (Pixels Per Inch, PPI). On the contrary, a lower precision means a larger area of each pixel area Px and a smaller quantity of pixel areas Px per unit area.

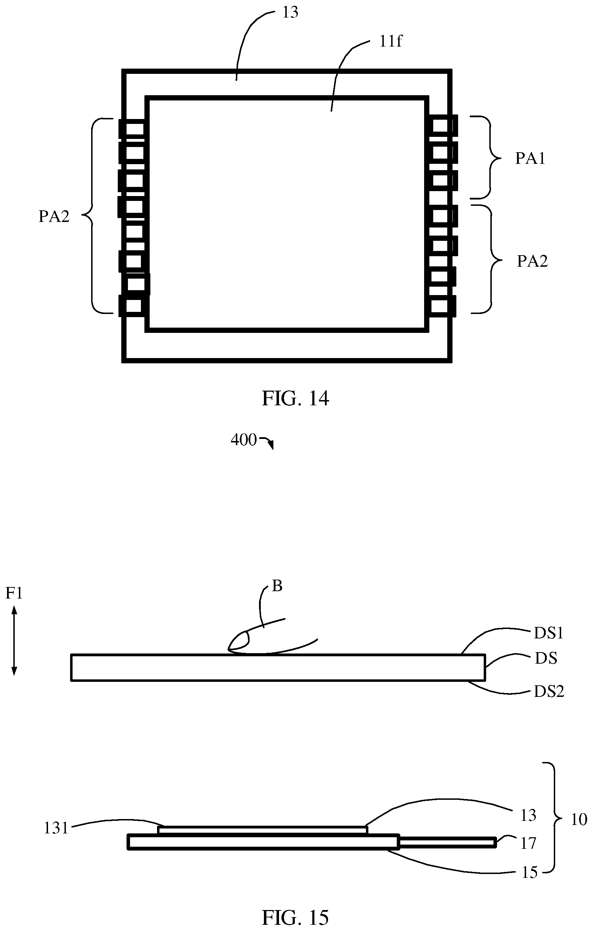

Refer to both FIG. 13 and FIG. 14. FIG. 14 is a top view of the fingerprint recognition apparatus 30 shown in FIG. 12. As shown in FIG. 13, a position in a peripheral area of the second base material layer ML2 further includes a plurality of first conductive pads PA1. The first conductive pads PA1 are electrically connected to the drive circuits in the pixel areas Px by using conductive wires (which is not illustrated); and cooperate with a scan circuit to load a plurality of voltages in the first voltage VI to the drive circuits in the pixel areas Px. The scan circuit is configured to control, based on a preset time sequence, pixel areas in different columns to receive the first voltage V1 at different time points. The optical film 11f shown in FIG. 12 can externally obtain different voltages corresponding to drive circuits in a plurality of pixel areas Px.

In this embodiment, for example, in the first time period t1, a manner of cooperation between the plurality of first conductive pads PA1 and the scan circuit is specifically as follows:

The scan circuit is electrically connected to a plurality of columns of pixel areas Px respectively by using a plurality of conductive wires. The scan circuit scans the first column of pixel areas Px, the second column of pixel areas Px, ..., and the $n^{th}$ column of pixel areas Px based on the preset time sequence.

Before the first column of pixel areas Px is scanned, the plurality of first conductive pads PA1 load a first voltage VI corresponding to the first column of pixel areas Px: V11, ..., Vi1, ..., and Vm1. When the first column of pixel areas Px is scanned, the plurality of first conductive pads PA1 load the voltages V11, ..., Vi1, ..., and Vm1 to drive circuits of the first column of pixel areas Px.

After the second column of pixel areas Px is scanned and before the second column of pixel areas Px is scanned, the plurality of first conductive pads PA1 reload a first voltage VI corresponding to the second column of pixel areas Px: V12, ..., Vi2, ..., and Vm2. When the first column of pixel areas Px is scanned, the plurality of first conductive pads PA1 load the voltages V12, ..., Vi2, ..., and Vm2 to drive circuits of the second column of pixel areas Px.

The rest is done in the same manner, until the scan circuit scans the $n^{th}$ column of pixel areas Px. After the $(n-1)^{th}$ column of pixel areas Px is scanned and before the $n^{th}$ column of pixel areas Px is scanned, the plurality of first conductive pads PA1 reload a first voltage V1 corresponding to the $n^{th}$ column of pixel areas Px: V1n, ..., Vin, ..., and Vmn. When the $n^{th}$ column of pixel areas Px is scanned, the plurality of first conductive pads PA1 load the voltages V1n, ..., Vin, ..., and Vmn to drive circuits of the $n^{th}$ column of pixel areas Px.

Therefore, in the first time period t1, the voltages {V11, V12, ..., V1n, ..., Vnm} in the first voltage set V1a are all loaded to pixel areas Px at corresponding positions at different times.

In addition, in the second time period t2, the third time period t3, and the fourth time period t4, the scan circuit cooperate with the plurality of first conductive pads PA1 to load a corresponding voltage set in the first voltage to the pixel areas Px.

Alternatively, in another embodiment of this application, a corresponding voltage set in the first voltage VI may be directly set based on a corresponding quantity of pixel areas Px, and then the first conductive pads PA1 load all voltages {V11, V12, ..., V1n, ..., Vnm} in the first voltage set V1a to pixel areas Px at corresponding positions at the same time.

Refer to FIG. 14 again. The image sensor 13 may also include a plurality of second conductive pads PA2. The image sensor 13 exchanges signals with other function modules by using the second conductive pads PA2. For example, the image sensor 13 exchanges a signal with the image processor by using the second conductive pad PA2.

In this embodiment, the plurality of second conductive pads PA2 and the plurality of first conductive pads PA1 are disposed on a same plane.

Refer to FIG. 12 and FIG. 14 again. Corresponding to the plurality of second conductive pads PA2 and the plurality of first conductive pads PA1 in FIG. 14, a plurality of third conductive pads PA3 may be further disposed on the support member 15 shown in FIG. 12. The plurality of second conductive pads PA2 and the plurality of first conductive pads PA1 are electrically connected to the plurality of third conductive pads PA3 through wire bonding (wire bonding) with a same process. It can be understood that the plurality of third conductive pads PA3 may be further electrically connected to a flexible circuit board (FPC). The optical film 11f and the image sensor 13 may be connected to and exchange electrical signals with other functional circuits by using the flexible circuit board.

The image sensor 13 processes electrical signals converted from a plurality of optical signals that are provided by the optical film 11f based on different patterns and that are received in different time periods, to obtain a fingerprint image. Processing of the electrical signals includes signal superposition, encoding, denoising, signal enhancement, decoding, and the like.

Specifically, in a process of collecting an image of a fingerprint of a finger, the optical film 11f presents different patterns at different times, and the different patterns are different in phase.

In this embodiment, for example, a relationship between a luminance of light passing through the optical film 11f and a phase of a pattern may be represented as follows:

$$Lx=1/2*(1+\sin(\beta r2+\varphi)).$$

In the formula, $Lx$ represents the luminance of the light emitted by the optical film 11f, $r$ is a distance to a central point of the optical film 11f, $\varphi$ represents a phase of a current pattern of the optical film 11f, and $\beta$ represents a quantity of areas with different transmittances in the current pattern of the optical film 11f and a spacing between two areas having a same transmittance in an edge area that is in the current pattern of the optical film 11f and that is farthest away from the central point.

Light emitted to the image sensor 13 from the optical film 11f that presents different patterns at different times is converted into an electrical signal. Processing of the electrical signal includes the following steps:

Step 201. Select one group of electrical signals from a plurality of groups of electrical signals collected for each pattern, where the selected group of electrical signals includes richest feature points and can represent a fingerprint more accurately than another group of electrical signals, for example, includes most feature points of a ridge, a valley, and a node (crossover) in the fingerprint.

Step 202. Superpose a corresponding preset virtual image onto the selected group of electrical signals, where the preset virtual image is a virtual image that has a same pattern as that presented on the optical film 11f at a current moment.

Step 203. For each pattern, extract interference information obtained after the selected group of electrical signals and the preset virtual image are superposed, and perform computation, to obtain a fingerprint image; and then superpose fingerprint images corresponding to different patterns, to obtain a fingerprint image corresponding to the current fingerprint, where information that does not include a phase portion is noise and can be directly removed, and computation on information that includes a phase portion includes Fourier transform computation.

Refer to FIG. 15. FIG. 15 is a schematic diagram of a sectional structure along an I-I line of an electronic terminal 400 shown in FIG. 1 according to an eighth embodiment of this application. In this embodiment, the electronic terminal 400 is basically the same as the electronic terminal 200 shown in FIG. 11, and a difference lies only in that a fingerprint recognition apparatus 10 in the electronic terminal 400 does not include an optical film 11, and the optical film 11 in the electronic terminal 200 shown in FIG. 11 is replaced with a display screen DS. In other words, the display screen DS is reused to emit light to display an image, emit patterned light to a finger, and transmit light reflected by the finger to an image sensor 13, to obtain a fingerprint image.

The electronic terminal 400 includes the display screen DS (Display Screen) and a fingerprint recognition apparatus 10. The fingerprint recognition apparatus 10 further includes the image sensor 13, a support member 15, and a first circuit board 17. Specifically, as shown in FIG. 15, in the electronic terminal 400, the display screen DS (Display Screen) and the image sensor 13 in the fingerprint recognition apparatus 10 are disposed in sequence from top to bottom along a first direction F1.

Specifically, the display screen DS includes a fifth surface DS1 and a sixth surface DS2 that are opposite to each other in the first direction F1. The fifth surface DS1 is configured to bear the finger. To be specific, when the finger operates the mobile terminal 10, the finger comes near or directly comes into contact with the fifth surface DS1 of the display screen DS. The sixth surface DS2 is closer to the optical film 11 than the fifth surface DS1.

Operations of the display screen DS of emitting light to display an image and emitting patterned light to a finger to obtain a fingerprint image are not performed at the same time, but are performed in a time division manner. For example, the electronic terminal 400 includes an image display state and a fingerprint collection state that are executed at different times. When the electronic terminal 400 is in image display state, the display screen DS emits light based on image data (Data) to display an image, and stops emitting light with a first pattern based on a received first voltage VI. When the electronic terminal 400 is in fingerprint collection state, the display screen DS stops emitting light based on image data (Data), but emits light with a first pattern based on a received first voltage V1. The light is incident on the finger, and light reflected by the finger is transmitted to the image sensor 13, to obtain the fingerprint image.

On the one hand, the display screen DS is configured to emit light and display an image. In this embodiment, the display screen DS may be a liquid crystal display or an organic light-emitting diode (OLED) display. On the other hand, patterns shown in FIG. 3 to FIG. 10 that have different shapes and different color areas and that emit light with different intensities are disposed on the display screen DS. In this way, the display screen DS emits patterned light to a finger, and transmits light reflected by the finger to the image sensor 13, thereby achieving a same effect of patterning light as the optical film 11 shown FIG. 3 to FIG. 10.

The support member 15 is configured to support the image sensor 13. The first circuit board 17 and the support member 15 are disposed in adjacency, and the first circuit board 17 is electrically connected to the image sensor 13. A functional circuit on the first circuit board 17 provides driving power and a control signal to the image sensor 13, to drive and control the image sensor 13 to convert an optical signal into an electrical signal, and the electrical signal received from the image sensor 13 is transmitted to an image processor (which is not illustrated in the figure). The image processor performs processing such as amplification and filtering on the electrical signal, and constructs, based on a processed electrical signal, an image of a surface that is of the finger and that reflects the light. In this embodiment, the first circuit board 17 may be a flexible circuit board and is directly electrically connected to the image sensor 13. Alternatively, the first circuit board 17 may be electrically connected to the image processor 13 by using a board-to-board connector.

The image sensor 13 includes a third surface 131. The third surface 131 directly faces the optical film 11. In other words, the optical film 11 is disposed near the third surface 131 of the image sensor 13. Third optical processing is performed on the third surface 131, to collect light in a preset frequency band range.

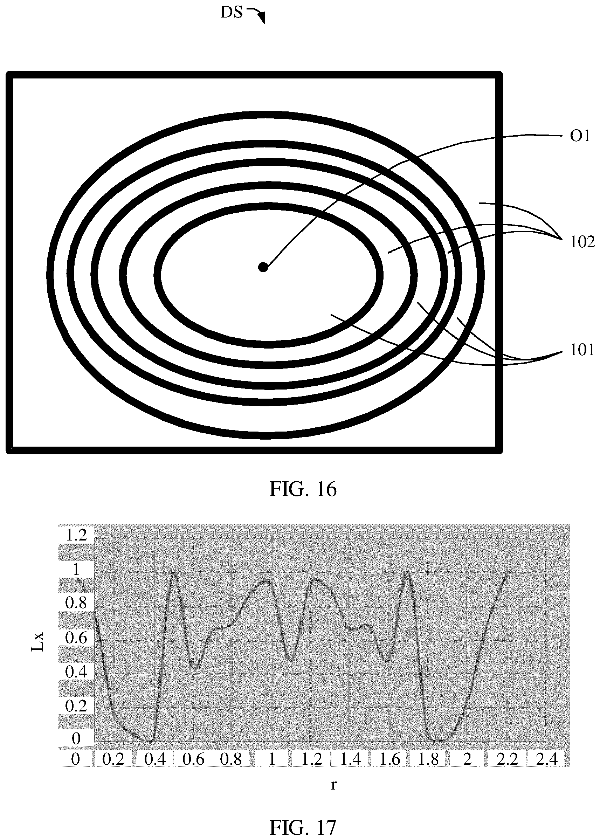

Refer to FIG. 16. FIG. 16 is a schematic diagram of a pattern shape of the display screen DS shown in FIG. 15 in an implementation of this embodiment. As shown in FIG. 16, the pattern shape of the display screen DS after patterning mainly includes at least two areas 101 and 102 that have different light intensities. To be specific, the pattern shape of the display screen DS after the patterning may include two, three, four, or another quantity of areas with different light intensities. A quantity of areas with different light intensities may be set based on an actual requirement. In this embodiment, the pattern shape of the display screen DS after the patterning mainly includes at least two areas 101 and 102 that have different light intensities. The areas have a same effect, as the at least two areas 101 and 102 with different transmittances in the optical film 11, of providing light with different intensities to the fingerprint sensor 13.

FIG. 17 shows light intensities of the two different areas 101 and 102 in the display screen DS. FIG. 17 is a schematic diagram of light intensity distribution of the two areas 101 and 102 that have different light intensities in the display screen DS shown in FIG. 16. As shown in FIG. 17, light intensities of light emitted by the first area 101 range from 85% to 95%, and light intensities of light emitted by the second area 102 range from 0% to 5%.

A relationship between intensities of light emitted by the first area 101 and the second area 102 and a distance to a central point O1 is specifically as follows: A phase at the central point O is used as an initial phase, and a light intensity varies with a curve designed according to a cosine rule. A specific correspondence may be represented by using the following formula:

$$Lx=0.5*(1+COS(100*r2^2+\varphi)).$$

Therefore, for the first area 101, a light intensity of light emitted by each first area 101 gradually decreases as a distance r to the central point O1 gradually increases. Therefore, an intensity Lx of light emitted to the image sensor 13 by each first area 101 gradually decreases.

For the second area 102, a light intensity of light emitted by each second area 102 gradually increases as a distance r to the central point O1 gradually increases. Therefore, an intensity Lx of light emitted to the image sensor 13 by each second area 102 gradually increases.

Therefore, intensities of light emitted to the image sensor 13 are diversified by disposing areas that emit light with different light intensities on the display screen DS. In this way, the image sensor 13 can have sufficient diversified optical signals to perform conversion, ultimately improving quality of an electrical signal obtained by the image sensor 13 by converting an optical signal and improving quality of an image constructed by using the electrical signal.

In another embodiment of this application, alternatively transmittances of all the first areas 101 may be set to a same value. For example, the transmittances of all the first areas 101 are 95%. Transmittances of all the second areas 102 may also be set to a same value. For example, the transmittances of all the second areas 102 are 5%.

The foregoing descriptions are merely preferred embodiments of this application. It should be noted that a person of ordinary skill in the art may make several improvements or polishing without departing from the principle of this application, and the improvements or polishing shall also fall within the protection scope of this application.

**Claims**

1. A fingerprint recognition apparatus, comprising an optical film and an image sensor that are disposed at an interval of a first distance along a first direction, wherein

   the optical film comprises a first area and a second area, transmittances of the first area and the second area are different, the first area and the second area form a first pattern, and when receiving light reflected by a first object, the optical film converts the light into an optical image that has the first pattern and transmits the optical image to the image sensor; and

the image sensor is configured to receive an optical signal of the optical pattern and convert the optical signal into an electrical signal, wherein the electrical signal is used to construct an image of a surface that is of the first object and that reflects the light.

2. The fingerprint recognition apparatus according to claim 1, wherein the first area and the second area are disposed alternately in adjacency starting from a central position of the optical film, the first area is an enclosed graph comprising curves or straight lines, and the second area is an enclosed graph comprising curves or straight lines.

3. The fingerprint recognition apparatus according to claim 2, wherein the optical film comprises at least two subregions, each subregion comprises the first area and the second area, and the first area and the second area are enclosed rings or rectangles.

4. The fingerprint recognition apparatus according to claim 1, wherein the first area and the second area are disposed alternately in adjacency starting from a central position of the optical film, the first area comprises segmental curves that have a same curvature or different curvatures, and the second area comprises segmental curves that have a same curvature or different curvatures.

5. The fingerprint recognition apparatus according to claim 4, wherein the first area and the second area are disposed alternately, and the first area and the second area are both in spiral shapes that gradually extend outward.

6. The fingerprint recognition apparatus according to any one of claims 2 to 5, wherein the optical film comprises at least two subregions, each subregion comprises the first area and the second area, and the first area and the second area are in spiral shapes that gradually extend outward.

7. The fingerprint recognition apparatus according to claim 1, wherein the optical film comprises at least two subregions, and the first area and the second area comprised in the subregions are in different shapes.

8. The fingerprint recognition apparatus according to claim 1, wherein the at least two areas comprise a first subregion and a second subregion;

the first area and the second area in the first subregion are both enclosed rectangles comprising curves or straight lines, and the first area and the second area in the second subregion are enclosed rings comprising curves or straight lines; or

the first area and the second area in the first subregion are both enclosed rectangles comprising curves or straight lines or enclosed rings comprising curves or straight lines, and the first area and the second area in the second subregion are in spiral shapes that gradually extend outward and comprise segmental curves that have a same curvature or different curvatures.

9. The fingerprint recognition apparatus according to claim 4, wherein the at least two areas comprise a first subregion, a second subregion, and a third area;

the first area and the second area in the first subregion are both enclosed rectangles comprising curves or straight lines;

the first area and the second area in the second subregion are enclosed rings comprising curves or straight lines; and

the first area and the second area in the third subregion are in spiral shapes that gradually extend outward and comprise segmental curves that have a same curvature or different curvatures.

10. The fingerprint recognition apparatus according to any one of claims 1 to 9, wherein the first distance is less than 0.5 millimeter.

11. The fingerprint recognition apparatus according to claim 10, wherein a thickness of the optical film along the first direction is less than 500 micrometers.

12. The fingerprint recognition apparatus according to claim 11, wherein the optical film and the first object are spaced by a second distance along the first direction, and the second distance ranges from 0.05 to 5 millimeters.

13. The fingerprint recognition apparatus according to any one of claims 1 to 12, wherein a material of the optical film is resin, glass, a high-transmittance material, or

a combination of one or more of a high-transmittance low-reflectivity material and a high-transmittance high-reflectivity material.

14. The fingerprint recognition apparatus according to claim 13, wherein the fingerprint recognition apparatus further comprises a first light source, the first light source is configured to provide auxiliary light, the auxiliary light passes through the optical film and is transmitted to the first object, the first light source and the image sensor are disposed on a surface of a support member, and the support member is configured to support the first light source and the image sensor; or

the first light source is a display screen, the display screen is configured to display an image and is disposed on a side that is of the optical film and that is away from the image sensor, and the display screen provides auxiliary light when displaying an image and directly transmits the auxiliary light to the first object.

15. The fingerprint recognition apparatus according to claim 14, wherein a distance between a first surface of the optical film and the surface of the support member is less than 1 millimeter in the first direction.

16. The fingerprint recognition apparatus according to claim 15, wherein the optical film comprises the first surface and a second surface that are disposed opposite to each other in the first direction, the first surface is farther away from the image sensor than the second surface, and first optical processing is performed on the first surface, to collect light in a preset frequency band range.

17. The fingerprint recognition apparatus according to claim 16, wherein the optical film comprises the first surface and the second surface that are disposed opposite to each other in the first direction, the first surface is farther away from the image sensor than the second surface, and second optical processing is performed on the second surface, to collect light in a preset frequency band range.

18. The fingerprint recognition apparatus according to claim 16 or 17, wherein the image sensor comprises a third surface, the third surface directly faces the optical film, and third optical processing is performed on the third surface, to collect light in a preset frequency band range.

19. The fingerprint recognition apparatus according to claim 1, wherein the optical film comprises a plurality of conductive electrodes, the plurality of conductive electrodes are configured to receive a first voltage, and the first voltage controls different areas of the optical film to have different transmittances, to form different patterns.

20. The fingerprint recognition apparatus according to claim 19, wherein patterns formed by the optical film at different time points are different in phase, area size, or inter-area spacing.

21. The fingerprint recognition apparatus according to claim 19 or 20, wherein the optical film comprises a first base material layer, a medium layer, and a second base material layer that are stacked in sequence, and a cavity is formed between the first base material layer and the second base material layer to accommodate the medium layer;

a plurality of pixel areas arranged as a matrix and a plurality of conductive pads are disposed on the second base material layer, a drive circuit is disposed in each pixel area, the drive circuit is electrically connected to the conductive pad and receive the first voltage by using the conductive pad, and the drive circuit generates electric fields with different strengths under control of different first voltages;
the medium layer has different transmittances in electric fields with different strengths; and
when different pixel areas receive different drive voltages, the first pattern with different transmittances is formed.

22. The fingerprint recognition apparatus according to claim 21, wherein the first base material layer is further configured to filter out light with a preset frequency band and wavelength.

23. The fingerprint recognition apparatus according to claim 22, wherein different first voltages are provided to the plurality of pixel units in different time periods, and the pattern according to any one of claims 7 to 13 is presented at different times.

24. An electronic terminal, comprising a display screen and the fingerprint recognition apparatus according to any one of claims 1 to 23, wherein the display screen is disposed on a side that is of the optical film and that is away from the image sensor along the first direction, the display screen and the optical film are spaced by a third distance, the third distance ranges from 0.005 to 5 millimeters, and light reflected by a first object passes through the display screen and is transmitted to the optical film.

25. The fingerprint recognition terminal according to claim 24, wherein the optical film is replaced with the display screen, and the display screen comprises the pattern according to any one of claims 7 to 13.

FIG. 1

100

F1

B

DS1

DS

DS2

111

11

d2

112

d1

131

13

17

15

10

FIG. 2

FIG. 3

FIG. 4

11c

O1

102

101

FIG. 5

11d

FIG. 6

11d

A1    A2

102

101

A3    A4

FIG. 7

11d

102

101

A1

A2

A3

A4

FIG. 8

11e

A1    A2

101
102

101
102

A3    A4

FIG. 9

11e

A1        A2

102

101        101

102

A3        A4

FIG. 10

200 ↘

F1

B

DS1
DS
DS2

d2

111

112

d1

11
14
20

131

13

FIG. 11

300 ↘

F1

B

DS

ML1
ME
ML2
11f

PA1

13

30

PA3

15

PA3

FIG. 12

FIG. 13

EP 3 989 110 A1

FIG. 14

400

FIG. 15

DS ↘

FIG. 16

FIG. 17

| INTERNATIONAL SEARCH REPORT | International application No. |
|---|---|
| | **PCT/CN2020/107477** |

**A.    CLASSIFICATION OF SUBJECT MATTER**

G06K 9/00(2006.01)i

According to International Patent Classification (IPC) or to both national classification and IPC

**B.    FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNKI, CNPAT, WPI, EPODOC, GOOGLE, IEEE: 指纹, 识别, 图形, 图案, 光学, 传感器, 光线, 透光, 透射, 反射, imag+, fingerprint, optical, touch, layer, sensor, light, area, cover

**C.    DOCUMENTS CONSIDERED TO BE RELEVANT**

| Category* | Citation of document, with indication, where appropriate, of the relevant passages | Relevant to claim No. |
|---|---|---|
| Y | CN 107977627 A (CHIPONE TECHNOLOGY (BEIJING) CO., LTD.) 01 May 2018 (2018-05-01) <br> description, paragraphs [0030]-[0060], and figures 1-6 | 1, 7, 10-15, 24, 25 |
| Y | CN 107958181 A (SHENZHEN SUNVOLVE TECHNOLOGY LTD.) 24 April 2018 (2018-04-24) <br> description, paragraphs [0047]-[0070], and figures 1-8 | 1, 7, 10-15, 24, 25 |
| A | CN 109583381 A (BOE TECHNOLOGY GROUP CO., LTD.) 05 April 2019 (2019-04-05) <br> entire document | 1-25 |
| A | US 2010321341 A1 (CHO, An-thung et al.) 23 December 2010 (2010-12-23) <br> entire document | 1-25 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2020** | **28 October 2020** |

| Name and mailing address of the ISA/CN | Authorized officer |
|---|---|
| **China National Intellectual Property Administration (ISA/ CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/107477**

| Patent document cited in search report | | | Publication date (day/month/year) | Patent family member(s) | | | Publication date (day/month/year) |
|---|---|---|---|---|---|---|---|
| CN | 107977627 | A | 01 May 2018 | None | | | |
| CN | 107958181 | A | 24 April 2018 | WO | 2018209661 | A1 | 22 November 2018 |
| CN | 109583381 | A | 05 April 2019 | US | 2020173856 | A1 | 04 June 2020 |
| US | 2010321341 | A1 | 23 December 2010 | TW | 201100904 | A | 01 January 2011 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910726557
- CN 201911209272
- CN 202010773510